# NEUE EUROPÄISCHE PATENTSCHRIFT

(11) **EP 0 435 228 B2**
(45) Veröffentlichungstag und Bekanntmachung des Hinweises auf die Entscheidung über den Einspruch: **22.01.1997**
(45) Hinweis auf die Patenterteilung: 08.06.1994
(21) Anmeldenummer: 90125292.4
(22) Anmeldetag: 21.12.1990
(51) Int. Cl.: H05B 41/29

(54) **Schaltungsanordnung zum Betreiben (und Zünden) einer Gasentladungslampe**
Circuit for operating (and igniting) a discharge lamp
Circuit pour alimenter (et amorcer) une lampe à décharge

(30) Priorität: 29.03.1990 DE 4010112; 29.12.1989 DE 3943350
(43) Veröffentlichungstag der Anmeldung: 03.07.1991
(73) Patentinhaber: Zumtobel Aktiengesellschaft, A-6850 Dornbirn (AT)
(72) Erfinder: Apsner, Bernhard, A-6923 Lauterbach (AT); Luger, Siegfried, A-6850 Dornbirn (AT); Pabst, Wolfgang, Dr., A-6850 Dornbirn (AT)
(74) Vertreter: Schmidt-Evers, Jürgen, Dipl.-Ing.

(56) Entgegenhaltungen:
- EP-A- 0 127 101
- EP-A- 0 361 665
- WO-A-88/09108
- AT-B- 380 373
- DE-A- 29 383
- DE-A- 3 208 607
- DE-A- 3 715 162
- DE-A- 3 719 356
- DE-A- 3 719 357
- DE-A- 3 729 383
- US-A- 4 904 905
- US-A- 4 914 558

## Beschreibung

Die Erfindung betrifft eine Schaltungsanordnung zum Betreiben, insbesondere zum Zünden, einer Gasentladungslampe gem. dem Oberbegriff des Anspruches 1. Eine Schaltungsanordnung der im Oberbegriff des Anspruches 1 beschriebenen Art ist aus der WO 88/09108 bekannt.

Es ist bekannt, sogenannte elektronische Vorschaltgeräte (EVG) einzusetzen, die eine hochfrequente Wechselspannung an Gasentladungslampen oder Leuchtstoffröhren abgeben. Mit EVGs ist es möglich, die Leuchtstofflampen schonend vorzuheizen, zu betreiben und zu zünden. Der Wirkungsgrad der Lampen wird heraufgesetzt sowie ein Betrieb mit reduzierter Lampenleistung (Dimmen) ermöglicht.

Ein Verfahren und ein elektronisches Vorschaltgerät zum Betreiben und Zünden von Gasentladungslampen ist beispielsweise aus der EP 0059064 bekannt. Dort wird ein fremdgeführter transistorisierter Wechselrichter eingesetzt, der über einen Serienresonanzkreis eine direkt beheizte Gasentladungslampe speist. Jeweils ein Anschluß der gegenüberliegenden Heizwendeln wird dort mittels eines Parallel-Heizkondensators verbunden. Den verbleibenden Anschlüssen der Heizwendeln wird über den Serienresonanzkreis die Lastspannung, bzw. die Wechselrichter-Ausgangsspannung, u_{W} zugeführt. Durch Verschieben der Ausgangsfrequenz des selbstgeführten Wechselrichters auf eine sogenannte Heizfrequenz von ca. 50kHz wird der Widerstand des Parallel-Heizkondensators so niederohmig, daß eine ausreichende Vorheizung der den Lastkreis bedämpfenden Heizwendeln der Leuchtstofflampe ermöglicht wird. Wird die Ausgangsfrequenz des fremdgeführten Wechselrichters nun in Richtung zu der Resonanzfrequenz des im Lastkreis befindlichen Serienschwingkreises verschoben, diese beträgt in der genannten Literaturstelle 28kHz, so wird sowohl die Zündung der vorgeheizten Gasentladungslampe als auch nach Zündung deren Nennbetrieb (mit Nennleistung) und Dimmbetrieb (mit reduzierter Lichtabgabeleistung) möglich.

Aus der DE-OS 33 38 464 ist ferner ein elektronisches Vorschaltgerät mit einerseits selbstschwingendem Wechselrichter als auch andererseits ein solches mit fremdgesteuertem Wechselrichter bekannt. Ein MOS-FET-Transistoren aufweisender Ausgangszweig des Wechselrichters speist in beiden Fällen einen Serienresonanz-Lastkreis, der aus einer Kapazität und einer Parallelschaltung aus je einer in Reihe geschalteten Gasentladungslampe und Induktivität gebildet wird. Die Heizwendel der parallelgeschalten Gasentladungslampen sind über je einen Parallel-Heizkondensator verbunden, so daß eine Vorheizung der Heizwendel durch Variation der Ausgangsfrequenz und/oder des Tastverhältnisses der Ausgang-Wechselspannung des im EVG vorgesehenen Wechselrichters ermöglicht wird. Die Variation des Tastverhältnisses bringt den zusätzlichen Vorteil, daß das Frequenzspektrum der Ausgangs-Wechselspannung zu höheren Frequenzanteilen hin verschoben wird, wodurch eine bessere Heizung (kleinerer Blindwiderstand des Parallel-Heizkondensators) der Gasentladungslampe im Dimmbetrieb gewährt ist.

Es ist wünschenswert, Gasentladungslampen auch in Sonderanwendungen wie z.B. im explosionsgeschützten Bereich (Ex-Bereich einsetzbar zu machen.

Hierfür ist es erforderlich, auf eine Vorheizung der Elektroden oder Wendeln zu verzichten, da in solchen Arbeitsbereichen keinerlei, ggfs. Explosionen auslösende, Wärmequellen oder gar Glühlampen eingesetzt werden dürfen. Auch müssen Funkenbildungen und Lichtbögen bei Schaltungshandlungen mit u.a. mechanischen Schaltern ausgeschlossen werden. Aufgrund von Vorschriften ist es daher erforderlich, die maximale Zündspannung von unbeheizt gestarteten Gasentladungslampen - eben aufgrund der Funkenbildungsgefahr - zu beschränken. Andererseits existieren Vorschriften, daß eine initiierte Glimmentladung, die aufgrund einer Zündspannung in einer unbeheizten Gasentladungslampe (Röhre) entsteht, eine vorgeschriebene Dauer nicht überschreiten darf.

Diesbezüglich sind derzeit die beiden Eckwerte (Maximalwerte) U_{Zmax} =1.5kv für die Zündspannung und als Zünddauer die Zeitspanne T_{Z}=100ms vorgesehen. Diese beiden Eckwerte bilden Grenzwerte, die in keinem Fall überschritten werden sollten. Ein sicheres Zünden (Starten) muß aber in jedem Fall gewährleistet sein. Dies wäre mit beliebig hoher und beliebig langer anliegender Zündspannung U_{Z} zu erreichen. Auf der anderen Seite sollen kaltgestartete Gasentladungslampen ebenso schonend gestartet und betrieben werden, wie die mit Glühkathoden betriebenen Gasentladungslampen. Eine beliebig lange anliegende und beliebig hohe Zündspannung ist somit zum einen wider die Vorschriften und zum anderen schlecht für die Röhre. Der Erfindung liegt die Aufgabe zugrunde, eine Schaltungsanordnung der zuvor beschriebenen Art derart auszubilden, daß die Gasentladungslampe mit beheizbaren Wendeln vorschriftenkonform und schonend in dem explosionsgeschützten Bereich betrieben werden kann.

Der erfindungsgemäße Effekt liegt nun darin, daß diese beiden Eckwerte gänzlich ausgenutzt werden, wobei jede Heizwendel der Gasentladungslampe kurzgeschlossen ist und im Kaltstart-Betrieb als Elektrode zur Zufuhr von Zündspannung und Betriebsstrom in/an die Gasfüllung der Gasentladungslampe einsetzbar ist, d.h. die Funktion der Maximalwerte (Effektivwerte) der Zünd-Wechselspannung verläuft für 100ms nahezu konstant auf dem Maximalwert von 1.5kV, anschließend, nach erfolgter Zündung, sinkt die Spannung mit hoher Steilheit auf die erforderliche Betriebsspanung. Es versteht sich, daß die Eckwerte nicht überschritten werden dürfen, jedoch es ohne weiteres möglich und auch gemäß der Erfindung sinnvoll ist, die Zünddauer (Zündphase) zu verkürzen, d.h. die Zündspannung wird in jenem Moment auf Betriebsspannungs-Werte zurückgenommen, in dem sich die Glimmentladung zu einer Normal-Entladung vor Ablauf der 100ms ausgebildet hat.

Der Zweck, der Zeit- und Amplitudenbegrenzung der Zündspannung wird bei einer Schaltungsanordnung gem. Anspruch 1 durch die Steuerbarkeit der Zündspannung erzielt. Die Variation der Frequenz und/oder des Tastverhältnisses einer Ausgangs-Wechselspannung ermöglicht es die beiden im Serien-Resonanzkreis vorgesehenen Resonanzfrequenzen f₁ und f₀ jeweils gezielt "anzufahren" und durch den Abstand der Ausgangs-Frequenz von jeweiligen Resonanzfrequenz die Zündspannung als auch die Betriebsspannung von ihrer Amplitude her einstellbar zu gestalten (selbstgeführter Wechselrichter). Gleichzeitig kann durch die Frequenz- und Tastverhältnisvariation bzw. Vorgabe der Amplitudenverlauf der Röhrenspannung über der Zeit frei vorgegeben werden (fremdgeführter Wechselrichter).

Die eine Frequenz f₁ der beiden Resonanzfrequenzen liegt deutlich oberhalb der zweiten Resonanzfrequenz f₀. Zur Zündung wird der Resonanz-Lastkreis in der Nähe der ersten Resonanzfrequenz f₁ betrieben, wodurch die zur Zündung einer Glimmentladung in der Gasfüllung der Röhre führende Zündspannung an dem zur Röhre parallelgeschalteten Kondensators entsteht. Zur schnellen Überführung dieser initiierten Glimmentladung wird die Ausgangs-Impedanz des in Reihe zur Röhre liegenden induktiven Teils des Serien-Resonanzkreises niedrig gewählt. Eine Senkung des Drosselwertes L₁ führt erfindungsgemäß zu einem sehr schnellen Laststrom-Anstieg, die Zündphase wird in kürzestmöglicher Zeit in die Betriebsphase übergeleitet. Ein stark reduzierter Drosselwert führt nun in der Betriebsphase auf einen zu hohen Lampenstrom I_{Leff}, der Nennstrom I_{N} und damit die Nennleistung der Lampe werden überschritten - -, die Lebensdauer sinkt. Da die Nenn-Betriebsfrequenz f_{N} aufgrund der Nenn-Verlustleistung des speisenden Wechselspannungsgenerators im wesentlichen vorgegeben ist, verbleibt ein geringer Spielraum zur Änderung des Betriebsstromes I_{Leff} der Gasentladungslampe über Änderung von f_{N}. Mit anderen Worten, wird die Drossel einerseits so gering wie möglich (schneller Stromanstieg) und andererseits so hoch wie nötig gewähit (Begrenzung des Betriebsstiomes), die Kombination dieser beiden Forderungen ist im Kennzeichen des Anspruches 3 angegeben.

Gemäß weiterer vorteilhafter Weiterbildung ist eine Abgleich-Schaltungsanordnung vorgesehen, die nach einer vorgegebenen Zeit die Frequenz und/oder das Tastverhältnis der von dem Wechselspannungsgenerator abgegebenen Ausgangs-Wechselspannung derart variiert, daß der Röhre im stationären Betrieb gerade die Nennleistung P_{N} zugeführt wird. Dieser, der Zündphase nachgeschaltete Eingriff, wird durch geringfügiges Erhöhen der Frequenz und/oder Senken des Tastverhältnisses der Ausgang-Wechselspannung des Wechselspannungsgenerators durchgeführt. Die wesentlichen Frequenzanteile der Ausgangs-Wechselspannung werden hierbei um einen vorgegebenen Betrag von der zweiten Resonanzfrequenz f₀, in deren Nähe sich die Nennfrequenz f_{N} befindet, entfernt (verschoben), so daß sich die Impedanz des Lastkreises erhöht wird und der Laststrom I_{Leff} als auch die Lampenleistung reduziert wird.

Ein Betrieb der Lampe in der stationären Betriebsphase mit einer reduzierten Nennleistung (Dimmetrieb) ist ebenso möglich, wie ein Betrieb bei voller Helligkeit (Nennbetrieb). Der Übergang in den Dimmbetrieb (vom Nennbetrieb) oder der Übergang von kurzzeitigen Betrieb mit überhöhter Leistungszufuhr in den Nennbetrieb kann sich zeitlich überschneiden oder zeitlich sichtbar voneinander entfernt sein.

Wird gem. Anspruch 2 als Wechselspannungsgenerator ein selbstgeführter Wechselrichter eingesetzt, so ist erfindungsgemäß durch Abstimmung des Wechselrichters (Emitterwiderstände, Rückkopplungen die Zündspannung als auch durch Abstimmung des Lastkreises der steile Anstieg des Laststromes nach erfolgter Glimmentladung einstellbar.

Wird als Wechselspannungsgenerator gem. Anspruch 7 ein fremdgeführter Wechselrichter eingesetzt so ist durch eine Führungsgröße die Ausgangsfrequenz dieses Wechselspannungsgenerators laststromunabhängig einstellbar. Auch kann sein Tastverhältnis laststromunabhängig variiert werden. Das vorgegebene zeitabhängige Frequenzprofil bewirkt in dem Resonanz-Lastkreis mit den zwei unterschiedlichen Resonanzfrequenzen f₀ und f₁ sowohl die Zündspannungsüberhöhung als auch den nunmehr wesentlich genauer einstellbaren Nennstrom I_{N}. Das Frequenzprofil ist nach erfolgter Zündung steil von der Zündfrequenz f_{Z} (≈f₁) in Richtung zur Nennbetriebsfrequenz f_{N} verschiebbar. Je schneller die Frequenzänderung erfolgt, je steiler ist auch der Stromanstieg in der gem. Anspruch 3 zu diminsionierenden Induktivität.

Gem. zweckmäßiger Weiterbildung wird abhängig von dem Lampen-Betriebszustand die Frequenz und/oder das Tastverhältnis des fremdgeführten Wechselrichters variiert. Dies entspricht einer automatischen Selbstanpassung der Frequenz und/oder des Tastverhältnisses des Wechselspannungsgenerators. Die Erfindung wird nachfolgend anhand von Ausführungsbeispielen näher erläutert.

Es zeigt
- Fig. 1: ein Ersatzschaltbild mit einem EVG und einem Ausführungsbeispiel einer die Gasentladungslampe enthaltenden erfindungsgemäßen Resonanz-Lastkreises,
- Fig. 2: ein ausführliches Schaltbild des Ausgangskreises eines Ausführungsbeispiels eines Wechselrichters im erfindungsgemäßen EVG, mit dem in der Voranmeldung erläuterten steuerbaren Element T₄,
- Fig. 3: einsetzbare Schaltertypen, welche als Schalter S₁,S₂ von Fig. 2 Einsatz finden können,
- Fig. 4a, 4b und 4c: zeitkorrespondierende Diagramme zum Frequenzverlauf, Laststromverlauf und Lastspannungsverlauf bei einer Schaltungsanordnung gemäß Fig. 1 oder 2,
- Fig. 4d: Ausschnittvergrößerung der Fig. 4c, mit einem Zündspannungsverlauf für die Gasentladungslampe von Fig. 1, wenn die in Fig. 4a,4b gezeigten Frequenz- und Laststromverläufe auftreten.

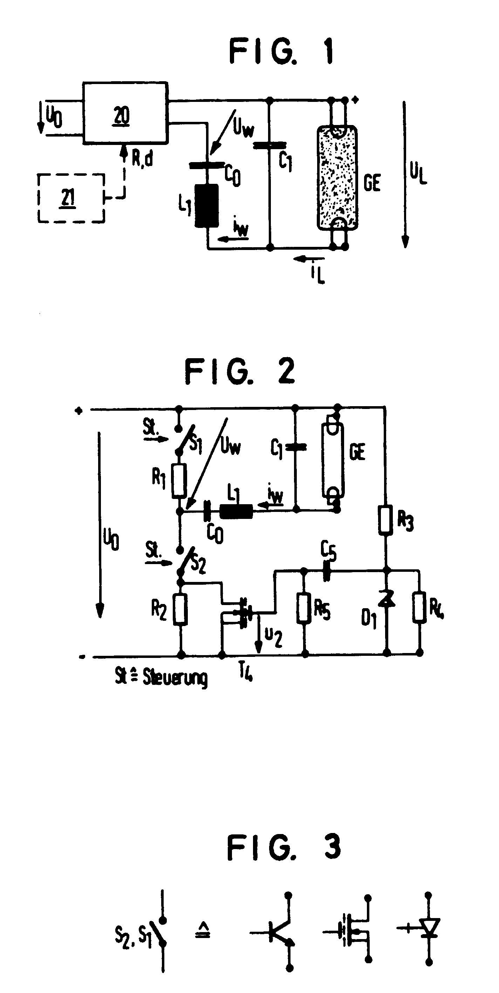

Fig. 1 zeigt ein Ausführungsbeispiel eines Lampen-Lastkreises, welcher an ein EVG 20 anschließbar ist. Das einem Wechselspannungsgenerator enthaltende EVG 20 wird von einer Gleichspannungsquelle U₀ gespeist, diese wird entweder von einer Batterie bzw. Gleichstromquelle oder von einer gleichgerichteten Wechselspannungsquelle mit Glättungskondensator gebildet. Der Lastkreis weist die Reihenschaltung aus einer Kapazität C₁, einer Kapazität C₀ und einer Induktivität L₁ auf. Dieser Serien-Resonanzkreis ist an die beiden Ausgangsanschlüsse des EVG 20 angeschlossen. Eine herkömmliche Gasentladungslampe GE ist mit ihren gegenüberliegenden Heizwendeln oder Elektroden parallel zum Kondensator C₁ des Resonanzkreises L_{1,}C₁,C₀ geschaltet. Die Heizwendeln sind jeweils kurzgeschlossen, da ein Heizstrom nicht auftritt. Sie dienen als reine an den beiden Enden der GE-Lampe angeordnete Elektroden. Gleichwertig sind auch Kaltstartlampen, die nur Elektroden, ohne Heizwendel aufweisen, einsetzbar.

Im ungezündeten Zustand der Gasentladungslampe GE wirkt als Kapazität des Resonanz-Lastkreises die Reihenschaltung aus C₀ und C₁. Die Induktivität L₁ ist in ihrem Wert gegenüber herkömmlichen Induktivitäts-Werten deutlich reduziert, so daß ein schneller Stromanstieg im Lastkreis nach Zündung der Röhre GE ermöglicht wird. Im Betrieb der Röhre, d.h. nach deren Zündung und nach Erreichen eines stationären Betriebszustandes ist C₁ praktisch wirkungslos. Die einer Gasentladungsröhre inhärente negative Spannungs/Stromcharakteristik (Lichtbogencharakteristik) dämpft den Schwingkreis derart, daß nunmehr die Kapazität C₀ im wesentlichen alleine mit der Induktivität L₁ die Resonanzfrequenz des Lastkreises im Betrieb der Röhre bestimmt. Die beiden Resonanzfrequenzen f₁ und f₀ sind im Ausführungsbeispiel in etwa um den Faktor 2 unterschiedlich. f₁ (im ungezündeten Zustand wirksam) beträgt ca. 42kHz, f₀ (die im stationären Betrieb der Röhre wirksame Resonanzfrequenz) beträgt ca. 23kHz. Zur Zündung der Röhre ohne Vorheizung ihrer Elektroden beziehungsweise Wendel gibt das EVG eine Wechselspannung u_{W} mit einer Frequenz ab, die geringfügig oberhalb von f₁ =42kHZ liegt (im vorliegenden Fall bei f_{Z}=45kHz). Hierbei entsteht an dem Kondensator C₁ eine stark überhöhte Resonanz-Spannung U_{Z}, die zur Einleitung einer Glimmentladung in der Röhre führt. Die sich zu einer stabilen Normal-Entladung ausbildende Glimmentladung belastet den EVG stärker und dämpft den parallelen Kondensator C₁, so daß sich die Resonanzfrequenz des nunmehr geänderten Lastkreises verändert.

Das Ausführungsbeispiel wurde mit folgenden Werten dimensioniert: C₁=15nF, C₀=33nF und L₁ =1.4mH
Hierbei sind zwei Fälle zu unterscheiden. Wird ein fremdgeführter Wechselrichter in den EVG 20 eingesetzt, so ist die Frequenz der Ausgangs-Wechselspannung u_{W} laststromunabhängig, die Frequenz wird entweder zeitabhängig oder abhängig vom erfaßten Betriebszustand der Röhre vorgegeben oder nachgeführt. Sie wird soweit gesenkt, daß sie noch oberhalb der zweiten Resonanzfrequenz f₀=23kHz liegt und gleichzeitig die Röhre den Nennstrom/Nennspannung aufnimmt. Auf diese Weise stellt sich eine Nenn-Betriebsfrequenz von f_{N}=35kHz ein. Die Reduzierung des Drosselwertes ermöglicht bei Absenken der Frequenz einen schnellen Stromanstieg und somit ein schnelles Überführen der Glimmentladung zu einer stabilen Normal-Entladung.

Wird im zweiten Fall ein selbstgeführter Wechselrichter in den EVG 20 eingesetzt, so kann die Frequenz, mit dem der selbstgeführte Wechselrichter schwingt, nicht vollständig frei vorgegeben werden. IdR schwingt ein selbstgeführter Wechselrichter auf der von dem Lastkreis vorgegebenen Resonanzfrequenz. Seine Schwingungsfrequenz ist jedoch in Grenzen einstellbar, indem interne Parameter, wie Emitterwiderstände oder Rückkopplungsparameter (Auslegung der rückkoppelnden Überträger) entsprechend angepaßt werden. Auch in diesem Fall beginnt die Zündung der Röhre mit einer Frequenz die geringfügig oberhalb der oberen Resonanzfrequenz f₁ =42kHz liegt. Die Zündung der Röhre führt zu der oben erläuterten Veränderung des Lastkreises und demnach zu einer veränderten Resonanzfrequenz. Der selbstgeführte Wechselrichter paßt die Frequenz seiner Ausgangs-Wechselspannung u_{W} dementsprechend an. Zusätzlich besteht für den selbstgeführten Wechselrichter eine Laststromabhängigkeit, so daß im Ergebnis nach Einsatz der Glimmentladung und bei dem reduzierten Drosselwert ein schneller Stromanstieg im Lastkreis bewirkt wird und gleichzeitig eine starke Absenkung der Frequenz der Ausgangs-Wechselspannung u_{W} erfolgt. Für den selbstgeführten Wechselrichter ergibt sich ein stationärer Betriebszustand bei einer Frequenz von ca. 28kHz. Dies liegt näher an der Betriebs-Resonanzfrequenz von f₀=23kHz. Die Röhre gibt in diesem Betriebszustand eine gegenüber der Lampen-Nennleistung P_{N} eine erhöhte Leistung P₁ ab. Im Ausführungsbeispiel liegt die Leistungserhöhung bei ca. +25%. Kurzzeitig wird diese erhöhte Leistungsabgabe toleriert, jedoch kann sie für den Dauerbetrieb zur Verkürzung der Lebensdauer der Röhre führen. Wie anhand von Fig. 2 noch näher erläutert wird, greift nach einer vorgebbaren Zeit T₅ eine Abgleich-Schaltungsanordnung über ein steuerbares Element T₄ derart in den Ausgangskreis des selbstgeführten Wechselrichters ein, daß die Frequenz der Ausgangs-Wechselspannung nach oben hin korrigiert wird, so daß auch für den selbstgeführten Wechselrichter ein stationärer Betrieb mit Nennleistung P_{N} der Röhre ermöglicht wird. Hernach liegt die Frequenz der Ausgang-Wechselspannung ebenfalls bei f_{N} = 35kHz.

Anzumerken wäre hierbei noch, daß die vorgebbare Zeitspanne T₅ in weiten Bereichen einstellbar ist, so daß zum einen die Frequenzanhebung der Ausgangs-Wechselspannung bereits während des Übergangs von der Glimmentladung zu der stationären Entladung erfolgt. Ebenso kann der frequenzkorrigierende Eingriff erst bei deutlich vergrößerter Zeitspanne T₅ erfolgen, wenn die Röhre bereits eine gewisse Zeit mit erhöhter Leistungsabgabe P₁ betrieben wurde. Dies kann abhängig von der Umgebungstemperatur oder den Umgebungsbedingungen vorgegeben werden.

Fig. 2 zeigt ein Detail-Schaltbild des Ausgangskreises des Wechselrichters im EVG 20, sowie schematisch den bereits anhand von Fig. 1 erläuterten Lastkreis L₁,C₁,C₀,GE. Der Ausgangskreis des Wechselrichters weist die Reihenschaltung aus Leistungsschalter S₁ und Leistungsschalter S₂ auf, welche in Serie (Reihe) zwischen den beiden +, - Anschlüssen einer Gleichspannungs- Versorgung U₀ (jene von Fig. 1) angeschlossen sind. Zwischen den beiden Schaltern S₁,S₂ wird die frequenz- und tastverhältnisvariable Ausgangsspannung u_{W} an den Resonanz-Lastkreis, abgegeben.

Die Bezeichnung Leistungsschalter bezieht sich auf jedwede Schaltertypen, welche über Ansteueranschlüsse (Gate, Basis, Lichtleitersteuerelektrode) ein- und abschaltbar sind. Dieses geschieht mit wesentlich höherer Frequenz, als der Netzfrequenz, beispielsweise oberhalb der Hörgrenze (f>20kHz). Einsetzbare Schaltertypen sind hierbei in Fig. 3 gezeigt. S₁,S₂ könnenLeistungstransistoren, MOS-FETs oder abschaltbare GTOs sein. Auch andere Schaltertypen sind einsetzbar.

In Reihe zu jedem Schalter S₁,S₂ von Fig. 2 ist ein Widerstand R₁,R₂ geschaltet. Diese Widerstände R₁,R₂ weisen unterschiedliche Widerstandswerte auf. Im Ausführungsbeispiel ist der Widerstand R₂, welcher mit dem negativen Versorgungs-Anschluß - von U₀ verbunden ist, größer gewählt.

Die unterschiedlichen Widerstände R₁ und R₂ begründen die Unsymmetrie der beiden Teilzweige des Wechselrichter-Ausgangszweiges. Diese Unsymmetrie kann auch in unterschiedlichen Schaltertypen S₁ und S₂ liegen. Die Realisierung mit im Ausführungsbeispiel unterschiedlichen Emitter-Widerständen bringt den Vorteil mit sich, daß das Schwingungsverhalten des selbstgeführten Wechselrichters durch Variieren der Widerstände R₁ und R₂ beeinflußt werden kann. Hierdurch wird es möglich die Schwingungsfrequenz, mit der der selbstgeführte Wechselrichter bei einem vorgegebenen Resonanz-Lastkreises (dessen Resonanzfrequenz) sich wie beschrieben ändert (schwingt), vorgegeben werden. Auf diese Weise kann bei bekannten Resonanzfrequenzen des Lastkreises aufgrund der Emitterwiderstände eine vorgegebene Zündfrequenz f_{Z} die eine vorgegebene Zündspannung U_{Z} bewirkt, eingestellt werden.

Der Resonanz-Lastkreis ist im Ausführungsbeispiel zwischen dem positiven Anschluß + der Versorgungs-Gleichspannung U₀ und dem Mittelabgriff des Ausgangszweiges des Wechselrichters angeschlossen. Auf gleiche Weise kann jedoch auch der Ausgangskreis zwischen dem Mittelabgriff-Ausgangsanschluß des Wechselrichters und dem negativen Versorgungs-Anschluß - von U₀ angeschlossen werden. Dies ist bedeutsam bei der Veränderung des Tastverhältnisses d von u_{W}(t). Parallel zu dem größeren Widerstand, hier R₂, ist ein in seinem Widerstand variierbares steuerbares Element T₄, hier ein MOS-FET, mit seinem Drain- und Source-Anschluß geschaltet. Die Dimensionierung von R₂ erfolgt derart, daß der Widerstandswert der Parallelschaltung aus R₂ und dem vollständig durchgeschalteten, nur noch mit seinem transistortypabhängigen Einschalt-Widerstand R_{DSon} wirksamen, steuerbaren Element T₄ gerade dem Widerstandswert R₁ entspricht (Symmetrie).

Das steuerbare Element T₄ wird von einer Abgleichs-Schaltungsanordnung R₅,C₅,D₁,R₄,R₃ mit einem Steuersignal u₁ angesteuert. Die Abgleichs-Schaltungsanordnung ist an der Versorgungs-Gleichspannung U₀ angeschlossen ist. Sie steuert zeitabhängig das steuerbare Element T₄ von dem leitenden Zustand (R_{DSon}) in den sperrenden Zustand (R_{DS} sehr hoch). Hierdurch erfolgt eine Frequenz- und Tastverhältnis (Einschaltdauer zu Ausschaltdauer) -Variation der Ausgangsspannung u_{W}-(t) des Wechselrichters beziehungsweise des EVG 20.

Sind der obere und untere Teilzweig des Wechselrichter-Ausgangszweiges im Augenblick der Zündung der Röhre GE symmetrisch oder im wesentlichen symmetrisch, d.h. das steuerbare Element T₄ leitet, so schwingt der selbstgeführte Wechselrichter auf seiner höchsten Frequenz. Nach Zündung der Röhre GE und nach Übergang der Glimmentladung in eine stationäre Normal-Entladung greift das zeitabhängig über das Steuersignal u₁ angesteuerte steuerbare Element T₄ in die bestehende Symetriebedingung ein. T₄ wird in den sperrenden Zustand überführt hierdurch wirkt sich die vollständige oder eine teilweise Unsymmetrie der vorgewählten Widerstände R₁ und R₂ auf die Schwingungsfrequenz des selbstgeführten Wechselrichters aus. Zum einen die bereits zuvor erfolgte Änderung der wirksamen Resonanzfrequenz des Resonanz-Lastkreises C₀, L₁ und GE und zum andern die vorwählbare Unsymmetrie von R₁ und R₂ bei sperrendem T₄ bestimmt nunmehr die wirksame Schwingungsfrequenz des Wechselrichters. Diese Frequenz wird als Nenn-Betriebsfrequenz f_{N} bezeichnet, sie bewirkt gerade die Abgabe der Nennleistung P_{N} der Röhre GE. Der Abgleich der Frequenz beziehungsweise des Tastverhältnisses durch den steuernden Eingriff des Elementes T₄ senkt somit die bei der geringen Drosselinduktivität L₁ anfallende überhöhte Lampenleistung P₁ und verlängert somit die Lebensdauer der Röhre.

Die Schwingungsfrequenz des selbstgeführten Wechselrichters verändert sich durch den Eingriff von T₄ von ca. 28kHz (hierbei wird ca.1.2x1P_{N} von der Röhre abgegeben) auf ca. 35kHz (hierbei wird die Nennleistung P_{N} von der Röhre abgegeben).

Der Abgleich der Symmetrie beziehungsweise der erwünschten Unsymmetrie kann ferner durch Begrenzung des Eingriffes von T₄ abgestimmt werden. Dies ist zum einen möglich indem zu T₄ ein weiterer Widerstand in Reihe geschaltet wird, wodurch bei durchgeschaltetem Element T₄ die Zündfrequenz des selbstschwingenden Wechselrichters abgleichbar ist. Zum zweiten ist es möglich T₄ nicht gänzlich in den sperrenden Zustand zu überführen, so daß im Betriebszustand der GE-Röhre eine weitere Veränderung der Frequenz f und des Tastverhältnisses d der Ausgangs-Wechselspannung u_{W} möglich ist. Hierdurch wird eine Variation der Helligkeit der Lampe GE, mithin daß Dimmen der Röhre möglich. Eine solche dimmende Anwendung des steuerbaren Elementes T₄ und der zugehörigen Abgleich-Schaltungsanordnung ist in der Voranmeldung (Gebrauchsmusteranmeldung G89.. ... vom 23.03.1990) der Anmelderin erläutert. Auch dort wird die Unsymetrie des Ausgangszweiges eines Wechselrichters sowie die Modulation dieser Unsymmetrie beschrieben. Zur näheren Erläuterung der Art und Weise der Ansteuerung des steuerbaren Elementes T₄ (dort Steuerschaltungsansordnung 10 genannt) sei ausdrücklich auf die genannte Gebrauchsmusteranmeldung verwiesen.

Die Abgleichs-Schaltungsanordnung R₅, C₅, D₁, R₄, R₃ gibt ein Steuersignal u₁ an das steuerbare Element T₄ ab. Dieses Steuersignal ist im Ausführungsbeispiel im wesentlichen das differenzierte Versorgungsspannungs-Signal U₀. Die Abgleichs-Schaltungsanordnung hat zum einen den beschriebenen differenzierenden Charakter, mit welchem die Zeitspanne T₅ (über R₅ und C₅) eingestellt wird, die das steuerbare Element T₄ durchgesteuert bleibt. Zum andern hat die Abgleichs-Schaltungsanordnung einen begrenzenden Charakter, da nur ein vorgegebener Teil der Versorgungsspannung differenziert wird. Die Versorgungs-Spannung beträgt in der Regel ca. 300V, jenes steuerbaren Element T₄ zugeführte Steuersignal u₁ hat eine Größenordnung von ca. 5V...15V. Eine Begrenzung oder Teilung der Versorgungsspannung ist somit zur direkten Ansteuerung des steuerbaren Elementes erforderlich. Im Ausführungsbeispiel ist die Differenzierung des Versorgungsspannungs-Signal jene mögliche Variante, die eine zeitabhängige Vorgabe des steuernden und abgleichenden Eingriffs in die Symmetriebedingung des Wechselrichters-Ausgangszweiges ausführt. Es ist jedoch ebenso unmöglich, diesen Eingriff betriebszustandsabhängig oder laststromabhängig zu gestalten. Ebenso wie der Einsatz eines selbstgeführten Wechselrichters im Ausführungsbeispiel der Figuren 1 und Figur 2 kann ein fremdgeführter Wechselrichter eingesetzt werden. Von einem solchen Wechselrichter können Frequenz f und Tastverhältnis d der Ausgangs-Wechselspannung u_{W} beliebig vorgegeben werden.

Beliebig im Sinne der Erfindung kann eine beliebige Abhängigkeit bedeuten, zum Beispiel lampentypabhängig oder laststromabhängig, oder eine feste zeitabhängige Frequenzprofilvorgabe. Eine beliebige Vorgabe kann jedoch ebenso bedeuten, daß die Frequenz und Tastverhältnisvariation durch ein Potentiometer vorgebbar ist, dessen variable Ausgangsspannung das steuerbare Element T₄ so steuert, daß ein Dimmbetrieb ermöglicht ist. Die Überlagerung von Dimmbetriebs-Steuersignal durch Potentiometer oder Steuerspannung und Steuersignal u₁ der Abgleichs-Schaltungsanordnung kann das handbetätigte (oder automatische) Helligkeitsregeln mit dem automatisch ablaufenden Zündvorgang der Röhre kombinieren.

Die Wirkungsweise der zeitabhängigen Frequenzverschiebung über das steuerbare Element T₄ ist zusammengesetzt die folgende:
1. Nach Einschalten der Versorgungsspannung U₀ liegt an der Zener-Diode D1 eine konstante Spannung von beispielsweise 15V an. Das Differenzierglied C₅,R₅ steuert für eine vorgegebene Zeit (T₅≈R₅xC₅) den Gate-Anschluß des Steuerelementes T₄ mit positiver Spannung u₁ an, so daß dieses leitet und im Emitter- bzw. Source-Kreis von S₂ die Parallelschaltung von R₂ und R_{DSon} wirkt. Der Wechselrichter ist symmetrisch und gibt eine Ausgangsspannung mit einer Frequenz ab, welche nahe der Resonanzfrequenz f₁ von L₁,C₁ und C₂ = C₁xC₀/C₁ + C₀ liegt. Vorzugsweise wird dieser Resonanzkreis induktiv betrieben, d.h. mit einer Frequenz, welche geringfügig oberhalb f₁ liegt.
2. Die Glimmentladung und die nachfolgende zeitbegrenzte Normal-Entladung bilden sich in der Röhre GE aus, dieses geschieht in Abstimmung mit der Wechselrichtereinstellung.
3. Das Differenzierglied steuert nach der Zeit T₅ das Steuerelement T₄ in den sperrenden Zustand, wodurch der Emitter- bzw. Source-Widerstand von S₂ erhöht wird; dies führt zu einem verringerten Tastverhältnis und zu einer Erhöhung der Frequenz des selbstgeführten (oder fremdgeführten) Wechselrichters. Die Ausgangs-frequenz von u_{W} wird heraufgesetzt.
4. Die Frequenzverschiebung zur höheren Frequenz als der unteren Resonanzfrequenz f₀, bewirkt eine Senkung des Lampenstromes I_{L}, der Wechselrichter 20 wird auf einen Nenn- bzw. Dimm-Arbeitspunkt (Betriebspunkt) hingesteuert. Die Röhre gibt die Nennleistung P_{N} oder eine entsprechend reduzierte Leistung (Dimmbetrieb) ab.

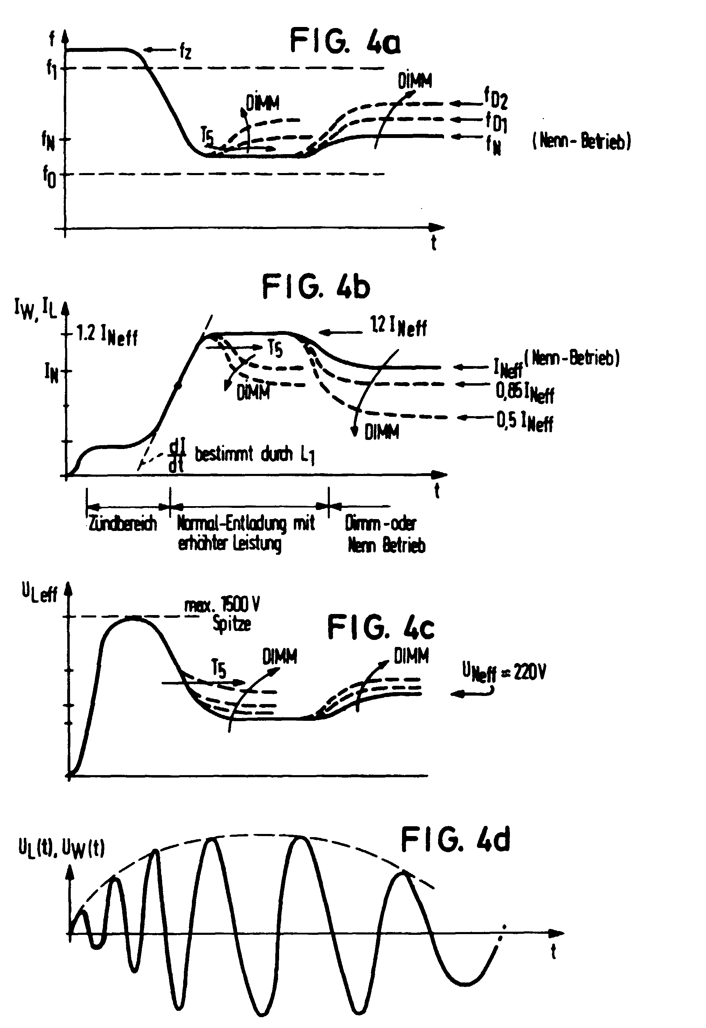

Nachfolgend seien die in den Figuren 4a 4d angegebenen Zeitdiagramme kurz erläutert. Die Diagramme gemäß Figur 4a, 4b und 4c korrespondieren zeitlich miteinander, im oberen Diagramm ist die zeitabhängige Frequenz f (t) dargestellt, im mittleren Diagramm der sich im Lastkreis ergebende Lampenstrom I_{L} in Abhängigkeit von der Zeit und der im oberen Diagramm gezeigten Frequenz. Das untere Diagramm zeigt den Spannungsverlauf, der an der Röhre GE anliegt.

Ausgehend von einer vorgegebenen Zündfrequenz f_{Z} (ca. 45kHz) bildet sich aufgrund des ungedämpften Resonanz-Lastkreies die in Figur 4c gezeigte hohe Zündspannung U_{Z} von maximal 1.5kV aus. Hierdurch wird eine Glimmentladung in der Röhre GE initiiert, die sich anschließend aufgrund der gering gewählten Drosselinduktivität L₁ sehr schnell zu einer Normal-Entladung ausbildet. Dies ist erkennbar an dem steilen Stromanstieg im Diagramm der Figur 4b. Gleichzzeitig mit dem schnellen Stromanstieg im Diagramm der Figur 4b sinkt die Frequenz im Diagramm der Figur 4a. Durch den steilen Stromanstieg und das schnelle Absenken der Frequenz wird die Lampe aus dem Glimmentladungs-Zustand schnellstmöglich und demnach schonend in den stationären-Entladungszustand überführt. Die Lampenspannung im Diagramm der Figur 4c sinkt entsprechend der hyperbelförmigen Strom/Spannungscharakteristik der Gasentladungslampe.

Die Unterhalb der Nennfrequenz f_{N} liegende Frequenz der Wechselrichter-Ausgangsspannung bewirkt aufgrund der geringen Induktivität eine erhöhte Lampenleistung wie sie in Figur 4b an dem 1.2-fachen Nennstrom erkennbar ist. Zur Reduzierung des erhöhten Lampenstromes auf Nennstrom I_{N} (oder auf gleichwohl reduzierte Lampenströme im Dimmbetrieb) wird mittels der Abgleich-Schaltungsanordnung und des steuerbaren Elementes T₄ (von Figur 2) die Frequenz f der Ausgangs-Wechselspannung u_{W} erhöht. Auch wird das Tastverhältnis d derselben Ausgangs-Wechselspannung u_{W} reduziert. Dies zeigt für die Frequenz f der durchgezogene rechte nach dem Sattel wieder ansteigende Abschnitt des Diagramms von Figur 4a. Hierdurch erfolgt eine Senkung des Nennsstromes in Figur 4b sowie eine Anhebung der Lampenspannung in Figur 4c.

Für das Ausführungsbeispiel des selbstgeführten Wechselrichters werden gem. Figur 2 sowohl Frequenz f als auch Tastverhältnis d verändert, bei Einsatz eines fremd-geführten Wechselrichters oder bei veränderter Schaltung des selbstgeführten Wechselrichters ist es auch im Sinne der Erfindung möglich, nur die Frequenz oder nur das Tastverhältnis zu verändern.

Der Einsatzpunkt der Abgleich-Schaltungsanordnung ist mit T₅ in den Diagrammen 4a, 4b und 4c veränderbar eingezeichnet. T₅ wird festgelegt durch den differenzierenden Anteil R₅, C₅ der Abgleich-Schaltungsanordnung. Bei Vergrößern von R₅, d.h. vergrößern der Zeitkonstante T₅ wird der steuernde Eingriff T₄ zeitlich nach rechts verschoben, d.h. er erfolgt später - die Lampe wird für eine längere Zeit mit erhöhter Lampenleistung betrieben. Dies kann vorteilhaft für bestimmte Lampentypen oder Umgebungsbedingungen sein. Andererseits ist bei reduzierter Zeitkonstante T₅ ein sofortiger Einsatz des steuernden Eingriffes über T₄ - auch wenn noch kein stationärer Betriebszustand erreicht ist - möglich. Hierdurch wird bereits im Ansatz eine erhöhte Lampenleistung vermieden.

Der in den Figuren 4a, 4b und 4c eingezeichnete gekrümmte Pfeil zur Andeutung der Helligkeitsreduzierung (des Dimmens) bezeichnet die Möglichkeit die mit einem der Abgleich-Schaltungsanordnung parallel geschalteten Potentiometer erzielt wird. Der Potentiometerabgriff sowie der Ausgang des Differenziergliedes C₅, R₅ werden dabei beispielhaft über Dioden entkoppelt gemeinsam auf das steuerbare Element T₄ geschaltet.

Hierdurch wird die durch gekrümmte Pfeilrichtungen in den Figuren 4a, 4b angezeigte Dimmung möglich.

Mit der durchgezogenen Linie ist in Figur 4a und 4b sowie 4c ein Frequenz-Lampenstrom- und Lampenspannungsverlauf beispielhaft gezeigt, wie er bei Verwendung nur der Abgleich-Schaltungsanordnung und des steuerbaren Elementes T₄ selbst tätig in einer Schaltungsanordnung gem. Figur 2 abläuft.

Figur 4e zeigt einen Zeitausschnitt aus der Figur 4c, hierbei ist erkenntlich, daß die hochfrequente, in ihrer Amplitude abhängig von den Resonanzbedingungen variierende Lampenspannung in Figur 4c nur mit ihrer umhüllenden (Verbindung der Maximalwerte) gezeichnet wurde. Ebenso kann die Figur 4c als Zeitverlauf des Effektivwertes der in seiner Amplitude beziehungsweise seinem Effektivwert variierenden Lampenspannung U_{L} angesehen werden

## Patentansprüche

1. Schaltungsanordnung zum Betreiben, insbesondere zum Zünden, einer Gasentladungslampe (GE),
mit einem Resonanzkreis (L₁, C₁, C₀), an welchen die Gasentladungslampe (GE) mit ihren beiden Heizwendeln anschließbar ist, und
mit einem Wechselspannungsgenerator (20), der eine Ausgangs-Wechselspannung (u_{W}) variabler Frequenz und/oder variablen Tastverhältnisses (d) an den Resonanzkreis (L₁, C₁, C₀) abgibt,
wobei die Gasentladungslampe (GE) unbeheizt ist und der Resonanzkreis (L₁, C₁, C₀) eine erste Resonanzfrequenz (f₁) und eine zweite unterhalb der ersten Resonanzfrequenz (f₁) liegende Resonanzfrequenz (f₀) aufweist, und
wobei zur Einleitung der Zündung der Lampe die wesentliche Frequenzkomponente der Ausgangs-Wechselspannung (u_{W}) des Wechselspannungsgenerators (20) in der Nähe der ersten Resonanzfrequenz (f₁) und nach Zündung der Lampe (GE) in der Nähe der zweiten Resonanzfrequenz (f₀) liegt,
**dadurch gekennzeichnet**,
daß jede Heizwendel der Gasentladungslampe (GE) kurzgeschlossen ist, und
daß jede Heizwendel im Kaltstart-Betrieb als Elektrode zur Zufuhr von Zündspannung (U_{z}) und Betriebsstrom (I_{L}) in/an die Gasfüllung der Gasentladungslampe (GE) einsetzbar ist.

2. Schaltungsanordnung nach Anspruch 1,
dadurch **gekennzeichnet**,
daß der Wechselspannungsgenerator (20) als selbstgeführter Wechselrichter ausgebildet ist, dessen Frequenz (f) bzw. Tastverhältnis (d) laststromabhängig (=f(i_{L})) und abhängig von einem Steuersignal (u₁) beeinflußbar ist.

3. Schaltungsanordnung nach Anspruch 1 oder 2,
dadurch **gekennzeichnet**,
daß der induktive Bestandteil (L₁) des Resonanzkreises (L₁,C₁,C₀) so bemessen ist, daß
a) der Lampenstrom (i_{L}) nach Einsatz einer zur Zündung führenden Glimmentladung in der Lampe (GE) in geringstmöglicher Zeit auf Nennstromniveau (I_{L}≤2I_{N}) ansteigt und
b) bei vorgegebener Nennbetriebs-Frequenz (f_{N}≈f₀) bzw. bei Nenn-Tastverhältnis (d_{N}), der Ausgangs-Wechselspannung (u_{w}) des Wechselspannungsgenerators (20) der Lampenstrom (i_{L}) der gezündeten Lampe (GE) auf Nennstromniveau (I_{L}≤2I_{N}) verbleibt.

4. Schaltungsanordnung nach Anspruch 2 oder 3,
dadurch **gekennzeichnet**,
daß eine Abgleich-Schaltungsanordnung (R₃,D₁,C₅,R₄,R₅,T₄) vorgesehen ist, welche über ein steuerbares Element (T₄), dem das Steuersignal (u₁) zuführbar ist, zeitabhängig und/oder versorgungsspannungsabhängig die Frequenz (f) und/oder das Tastverhältnis (d) der von dem Wechselspannungsgenerator (20) abgegebenen AusgangsWechselspannung (u_{w}) beeinflußt.

5. Schaltungsanordnung nach Anspruch 4,
dadurch **gekennzeichnet**,
daß die Abgleich-Schaltungsanordnung (R₃,D₁,C₅,R₄,R₅,T₄) ein Differenzierglied (C₅,R₅) aufweist, dessen Eingang an eine den Wechselrichter (20) speisende Gleichstrom-Zwischenkreisspannung (U₀) oder einen Teil (R₃,R₄,D₁) dieser anschließbar ist und
daß das Differenzierglied (R₅,C₅) das Steuersignal (u₁) an das steuerbare Element (T₄) des Wechselspannungsgenerators (20) abgibt.

6. Schaltungsanordnung nach Anspruch 1,
dadurch **gekennzeichnet**,
daß der Resonanzkreis (L₁,C₁,C₀) die Reihenschaltung einer Induktivität (L₁) und zweier Kapazitäten (C₁,C₂) aufweist und die beiden Resonanzfrequenzen (f₁,f₀) sich in etwa um den Faktor zwei unterscheiden.

7. Schaltungsanordnung nach Anspruch 1 oder Anspruch 3,
dadurch **gekennzeichnet**,
daß der Wechselspannungsgenerator (20) als fremdgeführter Wechselrichter ausgeführt ist, dessen Frequenz (f) bzw. Tastverhältnis (d) laststromunabhängig vorgebbar ist und
das eine Schaltungsanordnung vorgesehen ist, welche abhängig von einem Lampen-Betriebszustand, wie dem ungezündeten Zustand, dem Glimmentladungs-, dem Normalentladungs-, dem Nenn- oder Dimmbetriebszustand ein vorgegebenes Frequenzprofil für die Ausgangs-Wechselspannung (u_{W}) einstellt.

8. Schaltungsanordnung nach Anspruch 1 oder Anspruch 3,
dadurch **gekennzeichnet**,
daß ein fremdgeführter Wechselrichter als Wechselspannungsgenerator (20) eingesetzt ist, dessen Frequenz (f) von einer Schaltungsanordnung (R₅,C₅,21) zeitabhängig und/oder lampentypabhängig (GE) gesteuert ist.

9. Schaltungsanordnung nach Anspruch 2,
dadurch **gekennzeichnet**,
daß der selbstgeführte Wechselrichter einen an die Versorgungs-Gleichspannung (U₀) geschalteten unsymetrischen Ausgangszweig mit in Reihe geschalteter oberer (S₁,R₁) und unterer (S₂,R₂,T₄) Zweighälfte aufweist und
daß eine Abgleich-Schaltungsanordnung (R₃,C₅,D₁,R₄,R₅) mittels eines steuerbaren Elementes (T₄) nach vorgebbarer Zeitspanne (T₅) ausgehend von im wesentlichen symetrischen Zweighälften eine geringe Unsymetrie der beiden Zweighälften herstellt, womit gleichzeitig die Frequenz (f) erhöht und das Tastverhältnis (d) der zwischen den beiden Zweighälften abgegebenen Ausgangs-Wechselspannung (u_{W}) zur Herabsetzung der der Gasentladungslampe (GE) zugeführten Leistung (P₁) gesenkt wird.

10. Schaltungsanordnung nach Anspruch 9,
dadurch **gekennzeichnet**,
daß die obere sowie die untere Zweighälfte jeweils aus der Reihenschaltung eines ein- und abschaltbaren Leistungshalbleiters (S₁,S₂) und eines Widerstandes (R₁,R₂) gebildet sind und
daß die Unsymmetrie der beiden Zweighälften in unterschiedlichen Widerstandswerten der Widerstände (R₁,R₂) besteht wobei das steuerbare Element (T₄) parallel zu dem größeren (R₂) der Widerstände (R1, R2) geschaltet ist.

11. Schaltungsanordnung nach Anspruch 2, Anspruch 9 oder Anspruch 10,
dadurch **gekennzeichnet**,
daß das Steuersignal (u₁), welches das steuerbare Element (T₄) ansteuert, im wesentlichen aus der differenzierten, dem selbstgeführten Wechselrichter zugeführten Versorgungspannung (U₀) besteht.

## Claims

1. A circuit arrangement for operating, more particularly igniting, a gas discharge lamp (GE),
having a resonant circuit (L₁, C₁, C_{O}) to which the gas discharge lamp (GE) can be connected with its two heating coils, and
having an a.c. voltage generator (20) which supplies the resonant circuit (L₁, C₁, C_{O}) with an output a.c. voltage (u_{w}) of variable frequency and/or variable pulse duty factor (d),
whereby the gas discharge lamp is unheated, and the resonant circuit (L₁, C₁, C_{O}) has a first resonant frequency (f₁) and a second resonant frequency (f₀) below the first resonant frequency (f₁), and
whereby for the purpose of initiating the ignition of the lamp, the main frequency component of the output a.c. voltage (u_{w}) of the a.c. voltage generator (20) lies in the vicinity of the first resonant frequency (f₀) and after ignition of the lamp (GE) lies in the vicinity of the second resonant frequency (f₀),
characterized in that
each heating coil of the gas discharge lamp (GE) is shortcircuited, and
each heating coil can be used in cold-start operation as an electrode for supplying ignition voltage (U_{Z}) and operating current (i_{L}) to/into the gas filling of the gas discharge lamp (GE).

2. A circuit arrangement according to claim 1,
characterised in that,
the a.c. voltage generator (20) is a self-commutated inverter whose frequency (f) or pulse duty factor (d) can be influenced in dependence on the load current (=f(i_{L})) and in dependence on a control signal (u₁).

3. A circuit arrangement according to claim 1 or 2,
characterised in that,
the inductive component (L₁) of the resonant circuit (L₁, C₁, C₀) is dimensioned so that
a) the lamp current (i_{L}), after onset of a glow discharge leading to ignition in the lamp (GE), rises in the shortest possible time to rated current level (I_{L}≤2I_{N}) and
b) at preset rated operating frequency (f_{N}≈f₀) or at rated pulse duty factor (d_{N}) of the output a.c. voltage (u_{w}) of the a.c. voltage generator (20), the lamp current (i_{L}) of the ignited lamp (GE) remains at the rated current level (I_{L}≤2I_{N}).

4. A circuit arrangement according to claim 2 or 3,
characterised in that,
a balancing circuit arrangement (R₃, D₁, C₅, R₄, R₅, T₄) is provided and, via a controllable element (T₄) to which the control signal (u₁) can be supplied, influences the frequency (f) and/or the pulse duty factor (d) of the output a.c. voltage (u_{w}) delivered by the a.c. voltage generator (20), in dependence on time and/or in dependence on the supply voltage.

5. A circuit arrangement according to claim 4,
characterised in that,
the balancing circuit arrangement (R₃, D₁, C₅, R₄, R₅, T₄) comprises a differentiating element (C₅, R₅) whose input can be connected to a d.c. intermediate circuit voltage (Uₒ) feeding the a.c. voltage generator (20), or to a part (R₃, R₄, D₁) thereof, and
in that the differentiating element (R₅, C₅) delivers the control signal (u₁) to the controllable element (T₄) of the a.c. voltage generator (20).

6. A circuit arrangement according to claim 1,
characterised in that,
the resonant circuit (L₁, C₁, Cₒ) comprises an inductance (L₁) in series with two capacitances (C₁, C₂), and the two resonant frequencies (f₁, f₀) differ by about the factor two.

7. A circuit arrangement according to claim 1 or claim 3,
characterised in that,
the a.c. voltage generator (20) is a master-controlled inverter whose frequency (f) or pulse duty factor (d) can be preset independently of the load current and
in that a circuit arrangement is provided which sets a predetermined frequency profile for the output a.c. voltage (u_{w}) in dependence on an operating state of the lamp such as the non-ignited state, the glow discharge state, the normal discharge state, the rated-operation state or the dimmed-operation state.

8. A circuit arrangement according to claim 1 or claim 3,
characterised in that,
a master-controlled inverter is used as an a.c. voltage generator (20) whose frequency (f) is controlled by a circuit arrangement (R₅, C₅, 21) in dependence on time and/or on the type of lamp (GE).

9. A circuit arrangement according to claim 2,
characterised in that,
the self-commutated inverter has an asymmetrical output branch, connected to the d.c. supply voltage (Uₒ), having series connected upper (S₁, R₁) and lower (S₂, R₂, T₄) branch halves and
in that a balancing circuit arrangement (R₃, C₅, D₁, R₄, R_{5,}), via a controllable element (T₄), and after a presettable time (T₅), produces slight asymmetry between the two branch halves, starting from substantially symmetrical branch halves, thus simultaneously raising the frequency (f) and lowering the pulse duty factor (d) of the output d.c. voltage (u_{w}) delivered between the two branch halves in order to reduce the power (P₁) supplied to the gas discharge lamp (GE).

10. A circuit arrangement according to claim 9,
characterised in that,
the upper and the lower branch halves each comprise a series connection of a power semiconductor (S₁, S₂) which can be switched on and off and a resistor (R₁, R₂), and in that the asymmetry between the two branch halves consists in differences between the values of the resistors (R₁, R₂), the controllable element (T₄) being connected in parallel with the larger (R₂) of the resistors (R₁, R₂).

11. A circuit arrangement according to claim 2, claim 9 or claim 10,
characterised in that,
the control signal (u₁) which controls the controllable element (T₄) substantially comprises the differentiated supply voltage (U₀) supplied to the self-commutated inverter.

## Revendications

1. Agencement de circuit pour alimenter, notamment pour amorcer, une lampe à décharge (GE), comportant
un circuit de résonance (L₁, C₁, C₀) auquel la lampe à décharge (GE) est connectée par l'intermédiaire de ses deux filaments ou électrodes ainsi qu'un générateur de tension alternative (20) qui délivre au circuit de résonance (L₁, C₁, C₀) une tension de sortie (u_{W}) alternative à fréquence variable et/ou à rapport cyclique (d) variable,
la lampe à décharge n'étant pas chauffée,
le circuit de résonance (L₁, C₁, C₀) présentant une première fréquence de résonance (f₁) et une deuxième fréquence de résonance (f₀) qui est inférieure à la première (f₁) et
la composante principale de fréquence de la tension de sortie (u_{W}) alternative du générateur de tension alternative (20) étant voisine de la première fréquence de résonance (f₁) pour le déclenchement de l'amorçage de la lampe et de la deuxième fréquence de résonance (f₀) après l'amorçage de la lampe (GE),
caractérisé par le fait
que chaque filament de la lampe (GE) peut être court-circuité et que, en régime de démarrage à froid, chaque filament est utilisé comme électrode pour appliquer la tension d'amorçage (U_{z}) et le courant de fonctionnement (i_{L}) au/dans le gaz remplissant la lampe (GE)

2. Agencement de circuit selon la revendication 1, caractérisé par le fait que le générateur de tension alternative (20) est agencé sous forme d'onduleur à commutation automatique, sur la fréquence (f) voire le rapport cyclique (d) duquel on peut agir en fonction du courant de charge (=f(i_{L})) et en fonction d'un signal de commande (u₁).

3. Agencement de circuit selon la revendication 1 ou 2, caractérisé par le fait que le composant inductif (L₁) du circuit de résonance (L₁, C₁, C₀) est dimensionné de telle sorte que
a) le courant de lampe (i_{L}), après déclenchement dans la lampe (GE) d'une décharge luminescente menant à l'amorçage, atteint le plus rapidement possible le courant nominal (I_{L} ≤2 IN_{L}) et
b) pour une fréquence (f_{N} ≈ f₀) de régime nominal prédéterminée, voire pour un rapport cyclique (d_{N}) nominal de la tension de sortie (u_{W}) alternative du générateur de tension alternative (20), le courant de lampe (i_{L}) de la lampe amorcée (GE) reste au niveau de courant nominal (I_{L} ≤2 IN_{L}).

4. Agencement de circuit selon la revendication 2 ou 3, caractérisé par le fait qu'il est prévu un circuit d'équilibrage (R₃, D₁, C₅, R₄, R₅, T₄) qui, par l'intermédiaire d'un élément commandé (T₄) auquel est appliqué le signal de commande (u₁), en fonction du temps et/ou en fonction de la tension d'alimentation, agit sur la fréquence (f) et/ou le rapport cyclique (d) de la tension de sortie (u_{W}) alternative délivrée par le générateur de tension alternative (20).

5. Agencement de circuit selon la revendication 4, caractérisé par le fait que le circuit d'équilibrage (R₃, D₁, C₅, R₄, R₅, T₄) comporte un élément différenciateur (C₅, R₅), dont l'entrée est connectée à une tension continue (U₀) de circuit intermédiaire qui alimente l'onduleur ou une partie de celui-ci (R₃, R₄, D₁) et par le fait que l'élément différenciateur (C₅, R₅) délivre le signal de commande (u₁) à l'élément commandé (T₄) du générateur de tension alternative (20).

6. Agencement de circuit selon la revendication 1, caractérisé par le fait que le circuit de résonance (L₁, C₁, C₀) comprend le branchement en série d'une inductance (L₁) et de deux capacités (C₁, C₂) et que les deux fréquences de résonance (f₁, f₀) diffèrent approximativement du facteur deux.

7. Agencement de circuit selon la revendication 1 ou la revendication 3, caractérisé par le fait
que le générateur de tension alternative (20) est agencé sous forme d'onduleur à commutation automatique dont la fréquence (f), voire le rapport cyclique (d) est imposé en fonction du courant de charge et
qu'il est prévu un circuit qui, en fonction d'un état de fonctionnement de la lampe, tel que l'état éteint, le régime de décharge luminescente, le régime de décharge normale, le régime de fonctionnement à puissance nominale ou le régime de fonctionnement à puissance réduite, règle un profil de fréquence prédéterminé pour la tension de sortie (u_{W}) alternative.

8. Agencement de circuit selon la revendication 1 ou la revendication 3, caractérisé par le fait
que l'on utilise comme générateur de tension alternative (20) un onduleur à commutation commandée dont la fréquence (f) est commandée en fonction du temps et/ou du type de la lampe (GE) par un circuit (R₅, C₅, 21).

9. Circuit selon la revendication 2, caractérisé par le fait
que l'onduleur à commutation automatique comporte une branche de sortie dissymétrique qui est connectée à la tension de sortie (U₀) continue avec des demi branches supérieure (S₁, R₁) et inférieure (S₂, R₂ T₄) connectées en série et
qu'après un laps de temps (T₅) prédéterminé, un circuit d'équilibrage (R₃, C₃ D₁, R₄, R₅ ), à l'aide d'un élément (T₄) commandé, produit à partir des demi branches sensiblement symétriques une légère dissymétrie des demi branches, ce qui simultanément entraîne une augmentation de la fréquence (f) et diminue le rapport cyclique (d) de la tension de sortie (u_{W}) alternative disponible entre les deux demi branches aux fins d'abaisser la puissance (P₁) appliquée à la lampe à décharge (GE).

10. Agencement de circuit selon la revendication 9, caractérisé par le fait
que la demi branche supérieure et la demi branche inférieure sont formées respectivement par le branchement en série d'un semi-conducteur de puissance (S₁, S₂) commutable et d'une résistance (R₁, R₂) et
que la dissymétrie entre les deux demi branches est obtenue au moyen de résistances (R₁, R₂) de valeurs différentes, l'élément commandé (T₄) étant branché en parallèle avec la résistance (R₂) la plus grande parmi les résistances (R₁, R₂).

11. Agencement de circuit selon la revendication 2, la revendication 9 ou la revendication 10, caractérisé par le fait que le signal de commande (u₁) qui commande l'élément commandé (T₄) se compose essentiellement de la tension d'alimentation (U₀) différenciée appliquée à l'onduleur à commutation automatique.
